# EUROPEAN PATENT APPLICATION

(11) **EP 4 516 596 A1**
(43) Date of publication of application: **05.03.2025**
(21) Application number: 23194290.5
(22) Date of filing: 30.08.2023
(51) Int. Cl.: B60R 16/037, B60N 2/00, G10L 15/22

(54) **METHOD FOR PROVIDING A CONTROL INSTRUCTION FOR CONTROLLING AT LEAST ONE OCCUPANT SETTING FOR A SEAT LOCATION IN A VEHICLE**

(71) Applicant: Volvo Car Corporation, 405 31 Göteborg (SE)
(72) Inventor: CLAUDIO, David, 40531 Göteborg (SE); HUANG, Sheng, 50431 Göteborg (SE); MORGAN, Jake, 40531 Göteborg (SE); SCHWARTZ, Isak, 40531 Göteborg (SE); WENG, Chenyang, 40531 Göteborg (SE)
(74) Representative: Maiwald GmbH

(57) **Abstract**

The disclosure relates to a method (100) for providing a control instruction (CI) for controlling at least one occupant setting (OS) for a seat location (14) in a vehicle (10), a method (200) for generating an occupant settings profile (OSP1, OSP2) for an occupant (1, 2) in a vehicle (10), as well as a thereto corresponding computer program product, data processing apparatus (20) and vehicle (10).

## Description

### TECHNICAL FIELD

The present disclosure relates to a method for providing a control instruction for controlling at least one occupant setting for a seat location in a vehicle, a method for generating an occupant settings profile for an occupant in a vehicle, corresponding computer program products and data processing apparatuses as well as a vehicle.

### BACKGROUND ART

Occupants of vehicles spend a lot of time adjusting different settings, e.g., comfort settings, in the vehicle specific to their seat location. Even though some of the settings are only applicable to the driver, e.g., rear-view mirror position, some other settings are generally available in more than one seat, e.g., the front seats or all seats inside the vehicle. Settings based on individual preferences of occupants may need to be adjusted every time an occupant moves from one seat inside the vehicle to another seat inside the vehicle if they want to experience the same settings. Such adjustment requires manual input from the occupant, which may be time-consuming and cumbersome.

### SUMMARY

The problem is at least partially solved or alleviated by the subject matter of the independent claims of the present disclosure, wherein further examples are incorporated in the dependent claims.

According to a first aspect of this disclosure, there is provided a method for providing a control instruction for controlling at least one occupant setting for a seat location in a vehicle, the method comprising:
- receiving audio data based on speech of an occupant inside the vehicle,
- identifying a seat location of the occupant inside the vehicle based on the received audio data,
- identifying an occupant settings profile of the occupant, in particular indicative of one or more occupant settings of the occupant, based on a comparison of the received audio data with stored audio data associated with different occupant settings profiles, and
- providing the control instruction for controlling the at least one occupant setting for the identified seat location of the occupant based on the identified occupant settings profile.

The method may be at least partly computer-implemented, which may mean that one, multiple or all steps of the method may be carried out by a computer, and the method may be implemented in software or in hardware, or in software and hardware. Further, the method may be carried out by computer program instructions running on means that provide data processing functions. The data processing means or apparatus may be a suitable computing means, such as an electronic control module etc., which may also be a distributed computer system. The data processing apparatus or the computer, respectively, may comprise one or more of a processor, a memory, a data interface, or the like.

Accordingly, when using the method of the first aspect of this disclosure, one or more occupant settings at a seat location may be conveniently controlled by using the control instruction based on the identified occupant settings profile rather than requiring an occupant to perform cumbersome and time-consuming manual adjustments. The control instruction may be executed by a respective control unit of the vehicle, e.g., a seat position control unit and one or more actuators for adjusting a seat position controlled thereby. For example, this may be convenient when an occupant switches seats, i.e., moves from one seat location, e.g., the driver seat, to another seat location, e.g., the front passenger or, in other words, co-pilot seat, during a journey with the vehicle or in between journeys with the vehicle. In this case, the occupant does not have to manually adjust the settings at the new seat location to the settings of his previous seat location. Instead, the adjustments may be made by controlling the one or more occupant settings via the method of the first aspect of this disclosure, in particularly speech-based and/or automatically.

The received audio data is based on speech of an occupant inside the vehicle. The speech of the occupant may comprise a single word, multiple words or full sentences, and/or monologue or dialogue, for example. The audio data may be recorded by one or more audio recording devices of the vehicle, such as one or more microphones or one or more microphone arrays, for example. A microphone array may comprise two or more microphones, which may be arranged at different locations inside the vehicle. Accordingly, the audio data may be received from such one or more audio recording devices, for example.

The received audio data may be used for identifying the seat location of the occupant inside the vehicle. This may be done by locating the source of speech with respect to a known arrangement of the one or more audio recording devices and/or known arrangement of the seat locations. For example, when using a microphone array for recording the received audio data or, in other words, if the received audio data is based on a recording from one or more microphone arrays, the sound direction and/or sound level recorded by the different microphones may be used to determine the seat location of the speaking occupant. For example, the speaking occupant may be determined to sit at a location near a microphone where his speech is recorded with the highest sound level, which may, however, depend on further factors to be considered, such as the acoustics inside the vehicle.

For the identification of the seat location, an artificial intelligence (AI) model, in particular machine learning model, such as a deep learning model, may be used. The AI model may receive the audio data as input data and put out the identified seat location as output data. The AI model may have been trained with audio data for the specific vehicle, in particular its arrangement of one or more audio recording devices and/or interior design defining the acoustic behavior inside the vehicle, and it may have been validated. For such training, audio data from an audio database, comprising natural speaking of people with voices and/or languages, may be used. The AI model may be trained further during use of the method by providing the audio data received in the method to identify seat locations. This may be advantageous because different occupants may speak differently, e.g., into different directions, with different sound levels, or occupants may speak at the same time, and the AI model may learn further, in particular for the speech of the occupants of the vehicle, to more accurately locate the correct seat location of these occupants in every instance.

The identification of an occupant settings profile of the occupant is based on a comparison, which may in particular be a matching, of the received audio data with stored audio data associated with different occupant settings profiles. Accordingly, there may be different predetermined occupant settings profiles for different occupants. These different occupant settings profiles may correspond to different preferred or typical profiles of one or more occupant settings of each occupant that occupied the vehicle before at least once or several times. The occupant settings profile may be indicative of the one or more occupant settings of each occupant that occupied the vehicle before at least once or several times. The comparison may be used to identify, based on the received audio data, who the occupant at the identified seat location of the previous occupants is. For every one of these previous occupants, audio data may have been stored and may be made available for the method. This stored audio data may have been recorded by the above mentioned at least one audio recording device of the vehicle and associated with an occupant settings profile of one or more current occupant setting, as will be explained in more detail below. Accordingly, the received audio data, which may be currently received audio data, may be compared, in particular matched, to the stored audio data, which may be previously received and/or recorded audio data and may be from different occupants. The comparison may be done by comparing the received audio data with the stored audio data. When comparing audio data, it may be tried to find the best match, which may be given in percentage, between the received audio data and the stored audio data, e.g., in terms of sound, pronunciation, usage of words, etc. Thereby, the method may identify the occupant and the occupant settings profile associated with him based on the stored audio data associated therewith. Note that, although possible, it is not literally required that samples of or full audio recordings are compared with each other for matching them. For example, the method may be performed in a manner, where the received and/or stored audio data may be pre-processed. For example, characteristics or features of speech identified during the pre-processing of the audio data may be compared with each other for comparing, in particular matching, the received audio data to the stored audio data.Further, the method comprises providing the control instruction for controlling the at least one occupant setting for the identified seat location of the occupant based on the identified occupant settings profile. The method may further comprise controlling the at least one occupant setting for the identified seat location of the occupant based on the provided control instruction.

The control instruction may be determined on an individual basis, e.g., based on the individual occupant settings profile and/or a current situation, or may be pre-determined for each identified occupant settings profile. For example, when the occupant settings profile includes an air cabin temperature setting but the window at the respective seat location is open, on an individual basis, the current situation of the window being open may be used to determine the control instruction to not control the air cabin temperature for efficiency purposes. When the control instructions are pre-determined, however, the air cabin temperature setting may be adjusted according to the occupant settings profile despite the window being open.

Generally, the method may be used for providing more than just one control instruction. For example, the method may be used for providing several control instructions for controlling at least one occupant setting for multiple, particularly all, seat locations in the vehicle. Further, the method may be used for controlling multiple occupant settings, which may be different from one another and will be explained exemplary in more detail later.

In an example, the method may further comprise requesting of confirmation by the occupant before providing the control instruction. Further, the control instruction may be provided upon receiving the confirmation by the occupant. The confirmation request may be an audio command request and/or visible command request, e.g., on a display, or similar, for example. Thereby, it may be avoided that one or more identified occupant settings, which may correspond to the preferred settings of the occupant, are provided in a case where the occupant may want to use other settings than he usually prefers to use, for example for different seat locations or based on different situations.

In an example, the confirmation may be requested when a current occupant setting does not correspond to the identified occupant settings profile. For example, when at least one current occupant setting does not correspond to an occupant setting in the identified occupant settings profile, e.g., air cabin temperature settings as occupant settings do not correspond to each other, e.g., are not the same, then the confirmation may be requested. This may be the case when seat locations are changed by the occupants, for example. However, when seat locations are not changed, unnecessary requests may be avoided.

In an example, the comparison may comprise use of an artificial intelligence model trained to match the received audio data to the stored audio data. The stored audio data may be based on at least one of a voice dataset and the received audio data. The at least one voice dataset may be a general voice dataset covering different speakers and/or languages. The Al model may be pretrained with the at least one voice dataset and trained, during the execution of the method, with the received audio data to improve the accuracy of the matching. The Al model may be a machine learning model, in particular deep learning model, for example.

In an example, the stored audio data may comprise an audio profile of the occupant generated by the artificial intelligence model. Accordingly, the AI model may be further used to generate audio profiles from the stored audio data for different occupants rather than comparing respective audio data to each other in every instance. The audio profile may be data characterizing the speech, in particular voice, of occupants, e.g., sound levels, pronunciation, etc. but also word usage and similar, and thereby be a profile based on which the AI model may quickly match received audio data to voice data of different occupants and the thereto associated occupant settings profiles. The audio profile may be a voice profile associated with the voice of the occupant, for example.

In an example, the received audio data may be based on a conversation between two or more occupants inside the vehicle. The conversation may be a monologue, dialogue, trialogue etc. In other words, the audio data may be based on natural speech as opposed to keyword speech or command speech directed towards or, in other words, aimed at controlling vehicle settings. This allows for simple enablement of the herein described control of passenger settings without requiring any keywords or commands to be recognized by the vehicle, which many occupants tend not to use or are not correctly recognized by the vehicle, in which case they need to be repeated. Using audio data based on the natural conversation of occupants, a repetition of keywords or commands is not necessary, even if the vehicle may not immediately identify the occupant settings profile when the corresponding occupant speaks, e.g., speech too quiet to be identified.

In an example, the identifying of the seat location of the occupant may comprise signal processing of the received audio data. For example, as explained above, when using a microphone array for recording the received audio data or, in other words, if the received audio data is based on a recording from one or more microphone arrays, the sound direction and/or sound level recorded by the different microphones may be used to determine the seat location of the speaking occupant. To determine the sound direction and/or sound level, signal processing may be applied to the audio data, e.g., to determine high sound levels, low sound levels, average sound levels, sound directions, etc., which thereby increases the accuracy with which the seat locations may be identified.

In an example, the control instruction may be configured for controlling at least one comfort setting for the identified seat location. The at least one comfort setting may relate to adjusting the comfort of the occupant at the seat location.

In an example, the at least one comfort setting may comprise at least one of the following: a temperature setting, a sound setting and a seat position. The temperature setting may be an air cabin temperature setting, in particular for the respective seat location, e.g., by means of one or more air ducts oriented or orientable towards the seat location or the occupant at the seat location, for example. The sound setting may be a speaker sound level of one or more speakers sound-oriented towards the seat location or the occupant at the seat location or nearby the seat location, for example. The seat position may comprise one or more positions of several parts of the seat, such as the relative position of the seat in the cabin of the vehicle, the height of the seat, a recline angle of a backrest, a position of the headrest and/or similar. Further optional comfort settings may involve display settings of one or more displays positioned towards the seat location or occupant at the seat location or nearby the seat location, e.g., display on or off, display brightness, or open or closed windows, open or closed sunroof, etc.

In an example, the control instruction may be configured for controlling at least one driver setting for a driver seat location as identified seat location. This at least one further control instruction may be additional or alternative to the above exemplary control instruction(s). For the driver seat location, there are many more settings available than for the passenger seat locations for occupants in form of passengers. The settings for the driver seat location are herein referred to as driver settings, i.e., relate to the driving of the vehicle. Such driver settings may be a position and/or angle of the steering wheel, a position and/or angle of one or more mirrors, e.g., side mirrors, a driving mode selection, e.g., sport or economic driving mode, and so on.

According to a second aspect, there is provided a method for generating an occupant settings profile for an occupant in a vehicle, the method comprising:
- receiving audio data based on speech of an occupant inside the vehicle,
- identifying a seat location of the occupant inside the vehicle based on the received audio data, and
- generating an occupant settings profile, in particular indicative of one or more occupant settings of the occupant, associated with the received audio data based on at least one current occupant setting at the identified seat location.

Accordingly, the method of the second aspect is directed towards generating the occupant settings profile that is being identified in the method of the first aspect of this disclosure. By using the method of the second aspect, it is conveniently possible to associate received audio data of an occupant with an occupant settings profile based on the speech of the occupant. In other words, it is conveniently possible to map an occupant settings profile to an occupant, in particular his way of speaking, e.g., his voice. This avoids that the occupant must manually set up his occupant settings profile. Instead, the generation of the occupant settings profile may be an automatic and seamless process.

The received audio data may be stored and form the stored audio data. The received audio data may thereby be used as stored audio data in the method of the first aspect of this disclosure. Further, the received audio data as stored audio data may also comprise an audio profile of the occupant generated by an artificial intelligence model, which may be in a way as described with respect to the method of the first aspect of this disclosure.

Further, the method of the second aspect of this disclosure may comprise the step of generating at least one control instruction for controlling at least one occupant setting for the identified seat location of the occupant based on the generated occupant settings profile. Accordingly, the method of the first aspect may provide this control instruction. The at least one control instruction may be configured as described with respect to the first aspect of this disclosure, e.g., for controlling at least one comfort setting for the identified seat location, wherein the at least one comfort setting may comprise at least one of the following: a temperature setting, a sound setting and a seat position, and/or for controlling at least one driver setting for a driver seat location as identified seat location.

In an example, the generation of the occupant settings profile may comprise use of an artificial intelligence model for processing the audio data to generate an audio profile of the occupant and associating the occupant settings profile with the generated audio profile of the occupant. The audio profile may correspond to the audio profile described with respect to the method of the first aspect of this disclosure above.

Further, any of the above aspects or examples explained with reference to the method of the first aspect may be applied to the method of the second aspect and vice versa. For example, that the audio data may be based on a conversation between two or more occupants inside the vehicle as explained with reference to the method of the first aspect of this disclosure may be the case for the method of the second aspect of this disclosure as well. Also, both methods may be combined. In particular, any steps of both methods may be combined with each other.

According to a third aspect of this disclosure, there is provided a computer program product comprising instructions which, when the program is executed by a computer, cause the computer to carry out the method of the first aspect of this disclosure and/or the method of the second aspect of this disclosure. The computer program product may be a computer program, in particular as such, or a product containing the computer program, e.g., a computer readable medium having stored the computer program thereon.

According to a fourth aspect, there is provided a data processing apparatus comprising means for carrying out the method of the first aspect of this disclosure and/or the method of the second aspect of this disclosure. The data processing apparatus may comprise one or more modules for carrying out the steps of the method as mentioned herein. For example, every step may be carried out by a respective module of the data processing apparatus. Every one of the modules may be implemented as hardware and/or software, for example.

According to a fifth aspect, there is provided a vehicle comprising the data processing apparatus of the fourth aspect of this disclosure.

It is noted that the above examples may be combined with each other irrespective of the aspect involved. Accordingly, the methods may be combined with structural features and, likewise, the computer program product, the apparatus and the vehicle may be combined with features described above with regard to the methods.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a schematic illustration of steps of a first method of this disclosure;
- Figure 2: shows a schematic illustration of steps of a second method of this disclosure;
- Figure 3: shows a schematic illustration of an occupant settings profile generated by the second method of Fig. 2;
- Figure 4: shows a schematic illustration of a vehicle making use of the second method of Fig. 2; and
- Figure 5: shows a schematic illustration of the vehicle of Fig. 4 making use of the first method of Fig. 1 after the vehicle's occupants have changed seat locations inside the vehicle.

### DETAILED DESCRIPTION

The Figures are merely schematic representations and serve only to illustrate examples of the disclosure. Identical or equivalent elements are in principle provided with the same reference signs.

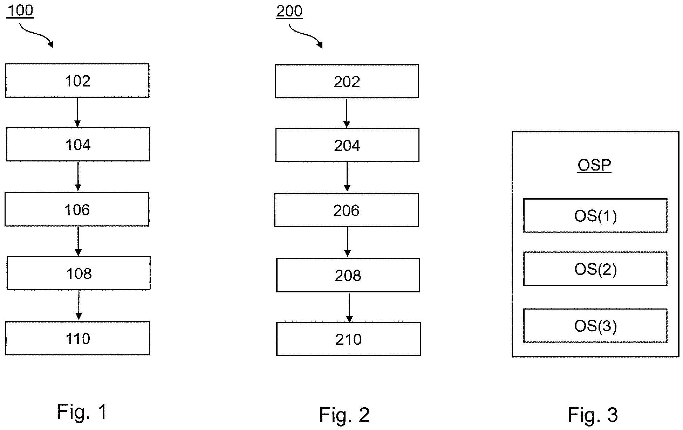

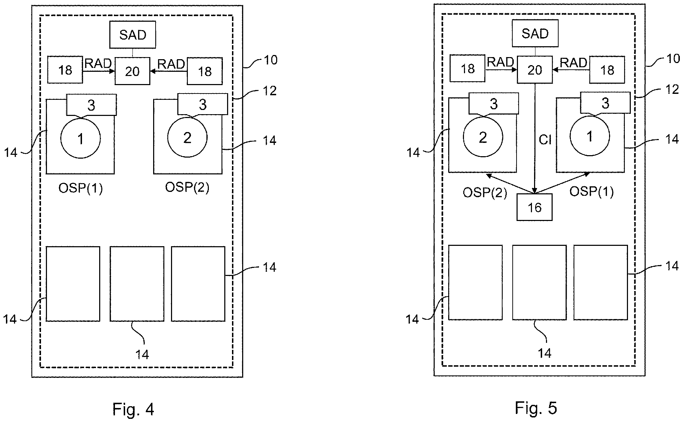

Figure 1 shows a schematic illustration of a method 100 for providing a control instruction CI for controlling at least one occupant setting OS for a seat location 14 in a vehicle 10 (see Figs. 4 and 5). Figure 2 shows a method 200 for generating an occupant settings profile OSP for an occupant 1, 2 in the vehicle 20.

The vehicle 10, as seen in Fig. 4 and 5, comprises a cabin 12, in which occupants 1, 2 are seated in respective seat locations 14, which may be in the form of respective vehicle seats. In this example, the vehicle 10 is a passenger car. The passenger car of this example has five seat locations, of which only the two front passenger seats or seat locations 14 are occupied by a first occupant 1 and a second occupant 2.

The vehicle 10 comprises several audio recording devices 18 inside the cabin 12, which may be comprise microphones, for example. In this example, two audio recording devices 18 are provided inside the cabin 12 and at different locations inside the cabin 12. Merely as an example, the audio recording devices 18 are located in a front portion of the cabin 12. Of course, the vehicle 10 may comprise more audio recording devices 18 and these may be located at different locations than exemplary shown in Figs. 4 and 5.

As seen in Fig. 5, the audio recording devices 18 are connected to a data processing apparatus 20, which is further connected to a control unit 16 for controlling occupant settings OS (see Fig. 3) as explained further below. Alternatively, there may be more than just one control unit 16. Further alternatively, the data processing apparatus 20 and the control unit 16 may be combined in one device. In particular, the data processing apparatus 20 may be configured for controlling the occupant settings OS without using the control unit 16.

The data processing apparatus 20 may comprise a processor and/or a computer program product. The computer program product may comprise instructions that, when executed by the processor, carry out the method 100 of Fig. 1 and/or the method 200 of Fig. 2 as explained below.

In step 202 of method 200 explained herein with reference to Fig. 4, speech 3 of the occupants 1, 2 inside the cabin 12 in the form of a conversation between the occupants 1, 2 is being recorded as audio data by the audio recording devices 18.

In step 204 of method 200, the audio data recorded in step 202 is being received by the data processing apparatus 20 as received audio data RAD. Accordingly, the received audio data RAD may be send to the data processing apparatus 20, e.g., by the audio recording devices 18.

In step 206 of method 200, based on the received audio data RAD, the seat locations 14 of the occupants 1, 2 are identified. This may be done by signal processing of the received audio data RAD. For example, based on the received audio data RAD, it may be established via the signal processing that the first occupant 1 is closer to the left audio recording device 18 of the vehicle 10 in Fig. 4, while the second occupant 2 is closer to the right audio recording device 18 in Fig. 4. Based on the signal processing, it may also be established that the speech 3 does not come from any of the back seat locations 14, e.g., based on the sound level of the speech 3. Thereby, the method 200 may establish that the first occupant 1 occupies the front left seat location 14, while the second occupant 2 occupies the front right seat location 14.

In step 208 of method 200, an occupant settings profile OSP(1), OSP(2) is associated with the received audio data RAD of each one of the occupants 1, 2 based on at least one current occupant setting OS at or of the identified seat locations 14. Such one or more occupant settings OS may be set manually by the occupants 1, 2, for example.

As may be seen from Figure 3, the occupant settings profile OSP may comprise several different occupant settings OS(1), OS(2), OS(3), three of which are shown herein exemplary. The three different occupant settings OS(1), OS(2), OS(3) may be comfort settings such as a temperature setting, a sound setting and a seat position, for example. The different occupant settings OS(1), OS(2), OS(3) define an occupant settings profile OSP for each one of the two front passenger seat locations 14 in Figs. 4 and 5.

In step 210 of method 200, the received audio data RAD may be stored, e.g., on a computer-readable storage medium of the data processing apparatus 20, as stored audio data SAD. For example, the stored audio data SAD may comprise an audio profile generated for each one of the occupants 1, 2 associating the occupant settings profiles OSP(1), OSP(2) thereto.

After the method 200 has been executed, when the occupants 1, 2 change seat locations 14 as shown in Fig. 5, the method 100 may be executed, which is now explained with reference to Figs. 1 and 5.

In step 102 of method 100, speech 3 of the occupants 1, 2 inside the cabin 12 in the form of a conversation between the occupants 1, 2 is being recorded as audio data by the audio recording devices 18.

In step 104 of method 100, the audio data recorded in step 202 is being received by the data processing apparatus 20 as received audio data RAD. Accordingly, the received audio data RAD may be send to the data processing apparatus 20, e.g., by the audio recording devices 18.

In step 106 of method 100, the occupant settings profiles OSP(1), OSP(2) of the occupants 1, 2 are identified based on a comparison, in particular matching, of the received audio data RAD with the stored audio data SAD from previous audio data recordings, which have been associated with the different occupant settings profiles OSP(1), OSP(2) by method 200. Accordingly, based on the received audio data RAD, it is recognized whether occupant 1 or occupant 2 occupies the front left seat location 14 and whether occupant 1 or occupant 2 occupies the front right seat location 14 in Fig. 5. Thereby, it may be determined that the occupants 1, 2 switched seat locations 14. However, the occupant settings OS at each one of the seat locations 14 may still be the same as before the switching of the seat locations 14. This may be uncomfortable for each one of the occupants 1, 2, requiring them to manually change occupant settings OS.

In step 108 of method 100, confirmation by the occupants 1, 2 is requested for changing one or more occupant settings OS at their seat locations 14, when these are different from their identified occupant settings profiles OSP(1), OSP(2).

Once the occupants 1, 2 confirm the change of the one or more occupant settings OS, in step 110 of method 100, one or more control instructions CI are provided for controlling the one or more occupant settings OS for the identified seat locations 14 of the occupants 1, 2 based on their identified occupant settings profiles OSP(1), OSP(2). In the example of Fig. 5, the control instructions CI are provided for the one or more control unit 16, which may adjust the temperature settings inside the cabin, the sound settings, e.g., sound level, and the seat position, e.g., the seat height, at their seat locations 14 when executing these control instructions CI.

Thereby, the method 100 provides for a convenient change of occupant settings profiles OSP(1), OSP(2) when occupants 1, 2 change seat locations 14 and the previous occupant settings OS from the previous occupants 1, 2 do not correspond to the preferences of the new occupant 1, 2 at that seat location 14 according to their individual occupant settings profiles OSP(1), OSP(2). Of course, the change of seat locations 14 is merely an example and of course there may be more than two occupants 1, 2 inside the vehicle 10, more than two occupant settings profiles OSP(1), OSP(2) and different seat locations 14 involved in the methods 100, 200.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 1, 2: occupant
- 3: speech
- 10: vehicle
- 12: cabin
- 14: seat location
- 16: control unit
- 18: audio recording device
- 20: data processing apparatus
- 100: first method
- 102-110: steps
- 200: second method
- 202-210: steps
- CI: control instruction
- OSP: occupant settings profile
- OS: occupant setting
- RAD: received audio data
- SAD: stored audio data

## Claims

1. A method (100) for providing a control instruction (CI) for controlling at least one occupant setting (OS) for a seat location (14) in a vehicle (10), the method (100) comprising:
- receiving audio data (RAD) based on speech of an occupant (1, 2) inside the vehicle (10),
- identifying a seat location (14) of the occupant (1, 2) inside the vehicle (10) based on the received audio data (RAD),
- identifying an occupant settings profile (OSP) indicative of one or more occupant settings of the occupant (1, 2) based on a comparison of the received audio data (RAD) with stored audio data (SAD) associated with different occupant settings profiles (OSP), and
- providing the control instruction (CI) for controlling the at least one occupant setting (OS) for the identified seat location (14) of the occupant (1, 2) based on the identified occupant settings profile (OSP).

2. The method (100) of claim 1, the method (100) further comprising requesting of confirmation by the occupant (1, 2) before providing the control instruction (CI).

3. The method (100) of claim 2, the confirmation being requested when a current occupant setting (OS) does not correspond to the identified occupant settings profile (OSP).

4. The method (100) of any one of the previous claims, the comparison comprising use of an artificial intelligence model trained to match the received audio data (RAD) to the stored audio data (SAD).

5. The method (100) of claim 4, the stored audio data (SAD) comprising an audio profile of the occupant (1, 2) generated by the artificial intelligence model.

6. The method (100) of any one of the previous claims, the received audio data (RAD) being based on a conversation between two or more occupants (1, 2) inside the vehicle (10).

7. The method (100) of any one of the previous claims, the identifying of the seat location (14) of the occupant (1, 2) comprising signal processing of the received audio data (RAD).

8. The method (100) of any one of the previous claims, the control instruction (CI) being configured for controlling at least one comfort setting for the identified seat location (14).

9. The method (100) of claim 8, the at least one comfort setting comprising at least one of the following: a temperature setting, a sound setting and a seat position.

10. The method (100) of any one of the previous claims, the control instruction (CI) being configured for controlling at least one driver setting for a driver seat location as identified seat location (14).

11. A method (200) for generating an occupant settings profile (OSP) for an occupant (1, 2) in a vehicle (10), the method (200) comprising:
- receiving audio data (RAD) based on speech of an occupant (1, 2) inside the vehicle (10),
- identifying a seat location (14) of the occupant (1, 2) inside the vehicle (10) based on the received audio data (RAD), and
- generating an occupant settings profile (OSP) associated with the received audio data (RAD) based on at least one current occupant setting (OS) at the identified seat location (14).

12. The method (200) of claim 11, the generation of the occupant settings profile (OSP) comprising use of an artificial intelligence model for processing the received audio data (RAD) to generate an audio profile of the occupant (1, 2) and associating the occupant settings profile (OSP) with the generated audio profile of the occupant (1, 2).

13. A computer program product comprising instructions which, when the program is executed by a computer, cause the computer to carry out the method (100) of any one of claims 1 to 10 and/or the method (200) of any one of claims 11 and 12.

14. A data processing apparatus (20) comprising means for carrying out the method (100) of any one of claims 1 to 10 and/or the method (200) of any one of claims 11 and 12.

15. A vehicle (10) comprising the data processing apparatus (20) of claim 14.
